**Europäisches Patentamt**

**European Patent Office**

**Office européen des brevets**

(19)

(11) Numéro de publication : **0 202 145 B2**

# (12) NOUVEAU FASCICULE DE BREVET EUROPEEN

(45) Date de publication du nouveau fascicule du brevet : **28.04.93 Bulletin 93/17**

(51) Int. Cl.⁵ : **F16D 69/02**

(21) Numéro de dépôt : **86400857.8**

(22) Date de dépôt : **22.04.86**

(54) **Matériau de friction poreux, notamment pour frein ou embrayages.**

(30) Priorité : **24.04.85 FR 8506230**

(43) Date de publication de la demande :
**20.11.86 Bulletin 86/47**

(45) Mention de la délivrance du brevet :
**31.08.88 Bulletin 88/35**

(45) Mention de la décision concernant
l'opposition :
**28.04.93 Bulletin 93/17**

(84) Etats contractants désignés :
**DE GB IT**

(56) Documents cités :
EP-A- 0 079 732
EP-B- 0 079 732
DE-A- 2 300 375
DE-A- 2 925 265
DE-A- 3 134 939
JP-A-59 103 040

(56) Documents cités :
US-A- 2 797 201
US-A- 3 030 215
US-A- 3 264 073
PATENTS ABSTRACTS OF JAPAN, vol. 8, no,
270 (M-344)[1707], 11 décembre 1984; & JP - A -
59 140 929 (KOMATSU SEISAKUSHO K.K.)
13-08-1984
PATENTS ABSTRACTS OF JAPAN, vol. 8, no.
220 (M-330)[1657], 6 octobre 1984; & JP - A - 59
103 040 (KOMATSU SEISAKUSHO K.K.) 14-
06-1984

(73) Titulaire : **VALEO**
**64 Avenue de la Grande Armée**
**F-75017 Paris (FR)**

(72) Inventeur : **Pilache, Michel**
**15, Allée des Saules**
**F-95250 Beauchamp (FR)**

(74) Mandataire : **Lemaire, Marc**
**Société VALEO Département Propriété**
**Industrielle 21, rue Blanqui**
**F-93406 Saint-Ouen (FR)**

EP 0 202 145 B2

## Description

La présente invention concerne un matériau de friction poreux, notamment pour freins ou embrayages, selon la première partie de la revendication 1. Un tel matériau poreux est connu de JP-A-59103040.

La porosité d'un matériau de friction est obtenue, d'une manière connue en soi, en laissant subsister, au sein dudit matériau, des interstices, dits pores. Lesdits pores sont obtenus, soit en intégrant dans le matériau des charges poreuses par elles-mêmes, telles que diatomées par exemple, soit en limitant, lors de l'élaboration du matériau, la pression de compression de l'organe de pressage, soit par le départ d'un solvant lors du séchage d'une préforme imprégnée par un vernis.

Il est connu de fabriquer un matériau de friction poreux pour utilisation, avec un contre-matériau, aussi bien dans un milieu humide que dans un milieu sec.

La porosité d'un matériau de friction est nécessaire, au cours d'un frottement sur un contre-matériau, pour faciliter soit l'élimination des produits de décomposition du matériau de friction lors de l'échauffement, soit l'augmentation de l'énergie pouvant être dissipée en fonctionnement humide, grâce à un meilleur renouvellement du fluide à l'interface matériau/contre-matériau, tout en conservant au matériau de friction un coefficient de frottement stable dans le milieu où il est destiné à travailler.

Des essais effectués par la Demanderesse ont montré que les matériaux de friction poreux actuels, possèdent une sensibilité importante aux conditions d'usage et subissent, lors du fonctionnement, une dégradation brutale par effet thermique ce qui semble du au fait que les pores ont une forme non définie et aléatoire.

La présente invention a pour objet de pallier ces inconvénients en améliorant les qualités du matériau de friction poreux par la création de pores en forme de fins canaux ou canicules régulièrement répartis dans le matériau.

Suivant l'invention, ledit matériau de friction poreux est caractérisé par la deuxième partie de la revendication 1.

De cette façon, il est possible de définir la forme et le volume des pores au sein du matériau de friction.

Les caractéristiques et avantages de l'invention ressortiront d'ailleurs à la lecture de la description suivante et d'un certain nombre d'essais effectués, cette description n'étant donnée qu'à titre d'exemple et en se référant aux dessins annexés, en lesquels:

- la figure 1 représente la photographie à grande échelle d'un échantillon illustrant l'aspect d'un matériau de friction d'après l'exemple 1 décrit ci-dessous.
- la figure 2 représente la photographie à grande échelle d'un échantillon illustrant l'aspect d'un matériau de friction selon l'invention d'après l'exemple 4 décrit ci-dessous.
- la figure 3 représente la photographie à grande échelle d'un échantillon illustrant l'aspect d'un matériau de friction selon l'invention d'après l'exemple 5 décrit ci-dessous.

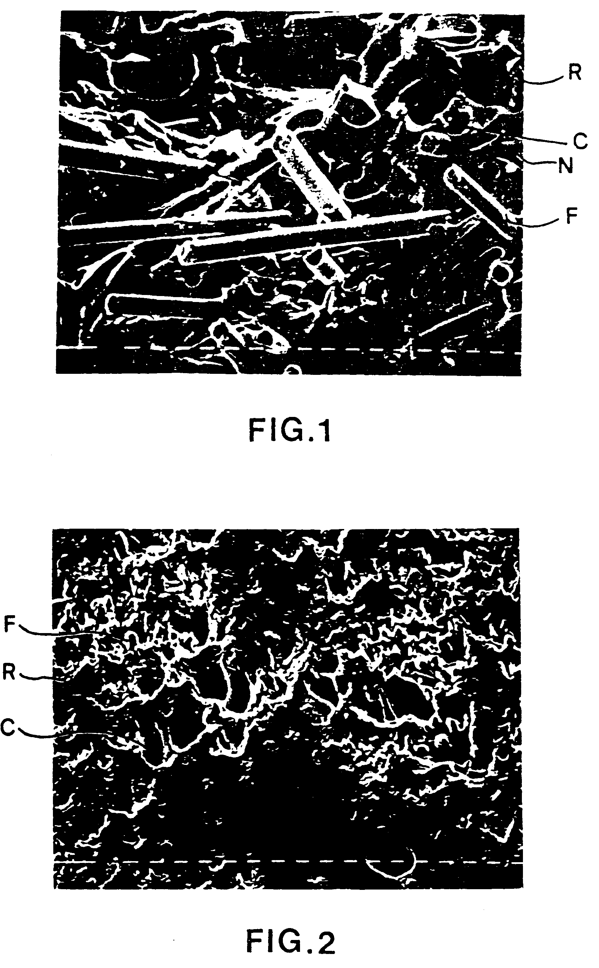

Tel que visible sur les figures 1 à 3, le matériau de friction poreux est constitué de fibres F, de liant R, de pores C selon l'invention. On retrouve également sur la fig. 1 des pores naturels N.

Suivant l'invention ces pores C ont une section circulairement continue se développant tout au long d'une longueur déterminée. Ainsi les pores C constituent de fins canaux de forme quasi-cylindrique, dits canicules. Lesdits canicules s'étendent selon une courbure alternative dans plusieurs sens, dite flexuosité.

Suivant l'invention la définition géométrique desdits canalicules flexueux est la suivante: diamètre compris entre 1 et 200 microns et longueur comprise entre 4 et 30 mm.

Grâce à cette définition géométrique il est aisé de connaître le volume des canalicules et suivant l'invention le volume occupé par lesdits canalicules représente 5 à 30 % du matériau de friction poreux.

Mais il existe au sein dudit matériau une porosité naturelle constituée de pores N comme visible fig. 1 qui est de forme non définie et de répartition aléatoire et qui est due au procédé de fabrication. De ce fait la porosité du matériau de friction poreux comprend le volume occupé par les canicules et le volume occupé par les pores naturels, la somme de ces deux volumes représentant suivant l'invention un volume total de 8 à 40 % du volume du matériau de friction poreux.

Le procédé, pour obtenir le matériau ayant les caractéristiques décrites plus haut, consiste à mélanger les constituants habituels d'un matériau de friction, tels que par exemple fibres, charges et liant, et de 5 % à 30 % de fibres thermodégradables pour former une composition de matières, à disposer cette composition de matières dans un moule, à la soumettre à une compression pour lui donner la forme d'une pastille, à cuire cette pastille à une température et sous une pression apte à assurer la solidification du liant tout en conservant l'intégralité des fibres thermodégradables, à surcuire à température telle que les fibres thermodégradables disparaissent. Cette température de surcuisson doit être telle qu'elle provoque la disparition des fibres thermodégradables mais ne doit pas atteindre la température de dégradation du matériau de friction.

De ce fait la disparition des fibres thermodégradables donne naissance aux canalicules.

Il est bien entendu que la définition géométrique des canalicules est liée, d'une certaine manière, à la définition géométrique des fibres thermodégradables.

Ainsi suivant l'invention le diamètre des canalicules est compris entre 1 et 200 microns, ce qui entraîne l'utilisation de fibres thermodégradables dont le diamètre est compris entre 1 et 200 microns.

Dans le cas où l'on désire un diamètre de canalicules, suivant l'invention, compris entre 1 micron et 30 microns, il est nécessaire d'utiliser de fines fibres thermodégradables. De ce fait il s'ensuit une répartition homogène des fibres thermodégradables au sein du matériau de friction. En effet plus la fibre est fine et plus il est aisé de la répartir au sein d'un matériau, ce qui permet d'obtenir une porosité répartie de façon homogène, après application du procédé décrit plus haut.

Suivant une autre caractéristique de l'invention le diamètre des canalicules est compris entre 10 microns et 30 microns. La fibre thermodégradable utilisée, pour obtenir la porosité nécessaire, est ici une fibre, dite textile, continue ou coupée.

Si l'on désire un diamètre de canalicules compris entre 30 microns et 200 microns, la fibre thermodégradable est ici sous forme de fil textile.

Lorsque l'on utilise des fibres longues on peut les disposer de façon à intéresser toute l'épaisseur du matériau; de ce fait, après application du procédé décrit plus haut, la porosité obtenue permettra, lors du fonctionnement matériau/contre matériau, la circulation du fluide d'une face du matériau à l'autre.

D'une manière générale la longueur des canalicules est définie de la façon suivante:

Pour obtenir des longueurs de canalicules comprises entre 4 mm et 30 mm, on utilise des fibres thermodégradables qui sont ici sous form de fil d'une longueur de 4 mm à 30 mm.

Les exemples suivants, donnés à titre non limitatifs, illustrent la présente invention et se sont avérés particulièrement avantageux.

**Exemple 1.**

Réalisation d'un matériau de friction poreux pour utilisation dans l'huile dont la composition en volume est la suivante:

| | |
|---|---|
| Fibre de verre E | 30 % |
| Résine phénolique | 40 % |
| Fibranne coupée | 20 % |
| Farine de bois | 10 % |

Ces constituants sont mélangés puis pastillés dans un moule à forme. La préforme obtenue est cuite en moule 10 minutes à une température de 130° C sous une pression de 200 bars. La surcuisson consiste à chauffer en atmosphère confinée avec une montée en température de 100° C par heur jusqu'à 400° C puis à maintenir cette température pendant une durée de 4 heures.

La Demanderesse a constaté, par examen au microscope d'une fracture comme visible à la figure 1, que les particules de fibres thermodégradables, ici de la farine de bois, avaient disparu pour laisser la place à des canalicules C. On remarque en effet des pores C quasi-cylindriques, de diamètres compris entre 1 micron et 30 microns répartis uniformément dans le matériau de friction.

A titre d'essais il a été effectué une comparaison du matériau de friction ainsi obtenu avec un matériau de friction habituel, ici un matériau de friction papier.

Les essais ont été effectués au cours d'un frottement dans l'huile dans les conditions de freinage suivantes:

| | |
|---|---|
| Vitesse initiale | 20 m/s, |
| Pression d'appui | 1 M Pa, |
| Inertie freinée | 3 kg m$^2$, |

Energie dissipée par freinage 100 & 200 J/cm$^2$

Endurance de 500 coups.

La mesure du coefficient de frottement µ donne les résultats suivants:

| Energie dissipée par Freinage | Valeurs usuelles, obtenues avec des matériaux de friction papiers usuels | Valeurs obtenues par le matériau de friction suivant l'exemple 1 |
|---|---|---|
| 100 J/cm$^2$ | µ statique 0,13 à 0,16<br>µ dynamique 0,11 à 0,15<br>usure en mm 0,005 à 0,015 | µ statique 0,09<br>µ dynamique 0,08<br>usure en mm 0,005 |
| 200 J/cm$^2$ | µ statique 0,13 à 0,16<br>µ dynamique 0,10 à 0,11<br>usure en mm 0,05 | µ statique 0,09<br>µ dynamique 0,07<br>usure en mm 0,005 |

On constate que l'usure du matériau de friction papier usuel est multipliée par 10 quand l'énergie dissipée par freinage passe de 100 J/cm² à 200 J/cm², alors que le matériau de friction, selon l'invention, conserve encore un taux d'usure faible dans les mêmes conditions d'essais.

**Exemple 2.**

Réalisation d'un matériau de friction poreux pour frottement à sec sur frein à disque dont la composition en volume est la suivante:

| | |
|---|---|
| Fibre de laitier | 40 % |
| Farine de bois | 5 % |
| Résine phénolique | 25 % |
| Sulfate de baryte | 17 % |
| Alumine | 3 % |
| Graphite | 5 % |
| Poudre de cuivre | 5 % |

Ces constituants sont mélangés à sec puis pastillés sous une pression de 300 bars. La cuisson en moule s'effectue pendant une période de 5 minutes à une température de 160° C sous une pression de 500 bars. La surcuisson s'effectue en étuve par une montée en température jusqu'à 215° C pendant 1 heure, puis par un palier à 215° C de 1 heure pour décomposer la fibre thermodégradable, ici de la farine de bois, puis une montée en température à 300° C et maintien à cette température pendant une période de deux heures.

Des essais, effectués en comparaison avec un témoin ne comportant pas de farine de bois, ont montré que, dans les mêmes conditions d'essais, le frottement, lors d'un essai d'échauffement jusqu'à 500° C, chute à 0,35 vers 250° C alors que le frottement du témoin chute à 0,22.

**Exemple 3.**

Réalisation d'un matériau de friction poreux pour frein à tambour dont la composition en volume est la suivante:

| | |
|---|---|
| Fibre de verre E | 30 % |
| Farine de bois | 10 % |
| Résine phénolique | 30 % |
| Cardolite | 5 % |
| Blanc de Meudon | 15 % |
| Oxyde de fer | 10 % |

Ces constituants sont mélangés à sec puis pastillés. La cuisson à la forme s'effectue à 135° C sous une pression de 200 bars, la surcuisson s'effectue par une montée de température jusqu'à 215° C pendant une durée de deux heures, puis par un palier à cette température pendant trois heures afin de permettre la totale décomposition de la farine de bois.

La porosité élevée laissée par la farine de bois va permettre de compenser la tendance au fading de ce type de matériau, qui est caractérisé par une teneur élevée en résine. Cette teneur élevée est rendue nécessaire pour le besoin d'une certaine conformabilité pour le contact matériau de friction-tambour.

Les examples 1 à 3 ne sont pas couverts par l'objet des revendications.

**Exemple 4.**

Réalisation d'un matériau de friction poreux pour fonctionnement en milieu humide, dont la composition en volume est la suivante:

| | |
|---|---|
| Fil de verre E | 30 % |
| Fil de fibranne | 20 % |
| Fil de cuivre | 10 % |
| Résine phénolique | 20 % |
| Caoutchouc SBB | 4 % |
| Soufre | 1 % |
| Blanc de Meudon | 10 % |
| Graphite | 5 % |

Les fils sont retordus pour créer un fil, ledit fil est imprégné d'un ciment constitué d'une suspension de résine, blanc de Meudon, graphite et soufre dans une dissolution de caoutchouc SBB. Ce fil est sèché puis enroulé concentriquement, puis cuit en moule à une température de 140° C sous une pression de 300 bars.

La surcuisson se fait avec une montée en température jusqu'à 400° C pendant une durée de quatre heures, puis avec un maintien de cette température pendant quatre heures.

A l'examen au microscope, comme visible à la figure 2, on peut constater que les pores C forment des canalicules faiblement inclinés par rapport à la face de frottement. Les canalicules ont ici un diamètre compris entre 10 microns et 30 microns.

**Exemple 5.**

Réalisation d'un matériau de friction poreux pour fonctionnement en milieu humide dont la composition en volume est la suivante:

| | |
|---|---|
| Fil de verre E | 40 % |
| Fil de coton | 10 % |
| Résine phénolique | 30 % |
| Terre de Diatomées | 20 % |

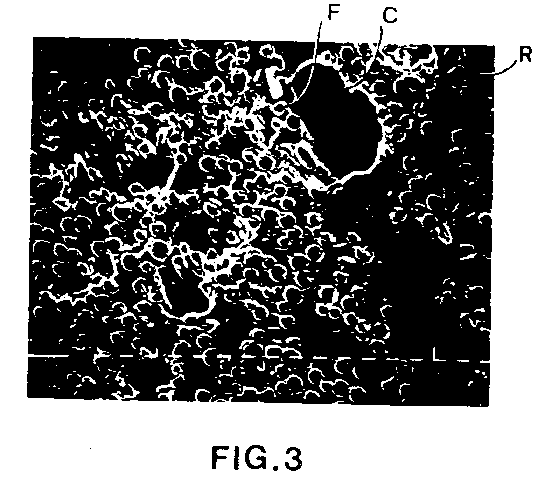

Le fil de coton est retordu autour du fil de verre pour former un fil puis ledit fil est imprégné dans une dispersion aqueuse de résine phénolique et de terre de Diatomées. Ce fil est ensuite séché et enroulé en lobes, puit cuit en moule sous une pression de 200 bars. La surcuisson s'effectue en étuve pendant une période de deux heures et à une température de 300° C de façon à ce que le fil de coton disparaisse complètement. A l'examen au microscope, comme visible à la figure 3, on peut voir que le fil de coton a laissé la place à des canalicules dont le diamètre est compris entre 30 microns et 200 microns.

**Revendications**

1. Matériau de friction poreux, notamment pour freins ou embrayages, du genre comportant des fibres (F), un liant (R), d'une part, des pores naturels (N) et, d'autre part, des pores (C) en forme de canalicules, dans lequel la porosité totale du matériau est comprise entre 8 et 40 % en volume, caractérisé par le fait que les canalicules (C) représentent 5 à 30 % en volume du matériau de friction, par le fait que les canalicules (C) sont obtenues par dégradation de fibres thermodégradables, par le fait que les canalicules ont une longueur comprise entre 4 et 30 mm et traversent toute l'épaisseur du matériau

2. Matériau de friction poreux suivant la revendication 1, caractérisé en ce que lesdits canalicules (C) sont flexueux.

3. Matériau de friciton poreux suivant l'une des revendications précédentes, caractérisé en ce que lesdits canalicules (C) ont un diamètre compris entre 1 et 200 microns.

4. Matériau de friction poreux suivant la revendication 3, caractérisé en ce que les canalicules (C) ont un diamètre compris entre 1 et 30 microns.

5. Matériau de friction poreux suivant la revendication 3, caractérisé en ce que les canalicules (C) ont un diamètre compris entre 10 et 30 microns.

6. Matériau de friction poreux suivant la revendication 3, caractérisé en ce que les canalicules (C) ont un diamètre compris entre 30 et 200 microns.

**Claims**

1. A porous friction material, especially for brakes or clutches, of the kind comprising, fibres (F), a binder (R), on one hand natural pores (N) and, on the other hand, pores in form of small channels (C), wherein the total porosity is 8 to 40 % of the volume, characterized in that the small channels (C) form 5 to 30 % of the volume of the friction material, in that the small channels (C) are obtained by destruction of thermodegradable fibres, in that the small channels (C) have a length between 4 and 30 mm and traverse the entire thickness of the material.

2. A porous friction material according to Claim 1, characterized in that the said small channels (C) are flexuous.

3. A pourous friction material according to one of the preceding Claims, characterized in that the said small channels (C) have a diameter between 1 and 200 microns.

4. A pourous friction material according to Claim 3, characterized in that the small channels have a diameter between 1 and 30 microns.

5. A pourous friction material according to Claim 3, characterized in that the small channels (C) have a diameter between 10 and 30 microns.

6. A porous friction material according to Claim 3, characterized in that the small channels (C) have a diameter between 30 and 200 microns.


**Patentansprüche**

1. Poröses Reibungsmaterial, insbesondere für Bremsen oder Kupplungen mit Fasern (F), einem Binder (R), einerseits Naturalporen (N) und andererseits Poren, die die Form von Kanälchen (C) aufweisen, wobei die Gesamtporösität 8 bis 40 % des Volumens beträgt, dadurch gekennzeichnet, daß die Kanälchen (C) 5 bis 30 % des Volumens des Reibungsmaterials ausmachen, daß die Kanälchen (C) durch Auflösen thermisch abbaubarer Fasern erhalten werden, daß die Kanälchen (C) eine Länge zwischen 4 und 30 mm aufweisen, und die ganze Dicke des Reibungsmaterials durchsetzen.

2. Poröses Reibungsmaterial nach Anspruch 1, dadurch gekennzeichnet, daß die Kanälchen (C) gebogen sind.

3. Poröses Reibungsmaterial nach einem der vorangegangenen Ansprüchen, dadurch gekennzeichnet, daß die Kanälchen (C) einen Durchmesser zwischen 1 und 200 Mikrometer aufweisen.

4. Poröses Reibungsmaterial nach Anspruch 3, dadurch gekennzeichnet, daß die Kanälchen (C) einen Durchmesser zwischen 1 und 30 Mikrometer aufweisen.

5. Poröses Reibungsmaterial nach Anspruch 3, dadurch gekennzeichnet, daß die Kanälchen (C) einen Durchmesser zwischen 10 und 30 Mikrometer aufweisen.

6. Poröses Reibungsmaterial nach Anspruch 3, dadurch gekennzeichnet, daß die Kanälchen (C) einen Durchmesser zwischen 30 und 200 Mikrometer aufweisen.

FIG.1

FIG.2

FIG.3